# EUROPEAN PATENT SPECIFICATION

(11) **EP 0 296 757 B1**
(45) Date of publication and mention of the grant of the patent: **01.12.1993**
(21) Application number: 88305478.5
(22) Date of filing: 15.06.1988
(51) Int. Cl.: C04B 41/83

(54) **Method for sealing carbon and graphite surfaces**
Verfahren zur Versieglung von Kohlenstoff- und Graphitoberflächen
Procédé pour boucher des surfaces en carbone et en graphite

(30) Priority: 16.06.1987 US 62635
(43) Date of publication of application: 28.12.1988
(73) Proprietor: UCAR CARBON TECHNOLOGY CORPORATION, Danbury, Connecticut 06817-0001 (US)
(72) Inventor: Noe, James Beam, Strongsville Ohio 44136 (US)
(74) Representative: Gore, Peter Manson

(56) References cited:
- WO-A-84/00566
- FR-A- 1 134 325
- FR-A- 2 237 838
- FR-A- 2 281 337
- US-A- 2 909 450
- HEMICAL ABSTRACTS, vol. 81, no. 16, 21st October 1974, page 273, abstract no. 95681g, Columbus, Ohio, US; & DD-A-102 594 (H. HENSEL et al.) 20-12-1973
- CHEMICAL ABSTRACTS, vol. 104, no. 26, June 1986, page 300, abstract no. 229588m, Columbus, Ohio, US; & SU-A-1 214 637 (MOSCOW ENGINEERING-CONSTRUCTION INST.) 28-02-1986
- CHEMICAL ABSTRACTS, vol. 93, July 1980, page 270, abstract no. 12382j, Columbus, Ohio, US; & JP-A-80 03 341 (DAINIPPON TORYO CO., LTD) 11-01-1980

## Description

This invention relates to topical treatments for sealing carbon and graphite surfaces, and more particularly to an improved method of impregnating and coating the surfaces of porous carbon and graphite articles in order to eliminate porosity.

In the production of composite materials such as, for example, graphite-epoxy composite parts for use in the aircraft and space industry, it is necessary to employ mold forming materials which are devoid of open porosity on the working surfaces thereof. The reason for this requirement is substantially, two-fold, namely, (1) to prevent intrusion of liquid resin into the mold media and (2) to prevent gas infiltration through the mold when a high pressure differential is applied across the mold cross-section.

Because of its superior dimensional stability over wide ranges of temperature variation and its high temperature tolerance, graphite is an ideal candidate for use as the mold forming material in the production of these composites. However, fine-grain graphite as manufactured and machined has undesirable surface porosity as well as dusting and poor wear characteristics which severely limit its use in this particular application.

A common method of eliminating porosity in graphite materials is to impregnate the billets with a liquid resinous material which, when cured, fills or blocks virtually all of the open pores. In these impregnation processes, the graphite article is placed in an autoclave, evacuated and then impregnated with a liquid resinous material. Following impregnation, the resin is cured in place by heating the billets. Multiple impregnation/curing cycles, usually three or more, are required to achieve complete sealing of porosity.

US-A-2 909 450 for example, discloses a method of treating a porous carbon electrode to eliminate its porosity wherein the carbon electrode is impregnated with a solution containing 65-99% by weight of a furfural 0.5-10% by weight of a zinc chloride catalyst and the balance water. The impregnation is carried out by immersing a carbon electrode in the solution within a treating cylinder which is then evacuated. Thereafter a pressure of 1034 kPa (150 p.s.i.) is applied for a period of about one hour. The impregnated electrodes are then removed from the treating cylinder and placed in an oven at 95 to 100°C to cure for 18 to 24 hours. This procedure may be repeated one or more times until the porosity of the carbon electrode is substantially eliminated.

In FR-A-1134255 there is disclosed a method of preparing bodies moulded from graphite or carbon and with impregnation by synthetic resin, which consists of subjecting these bodies, after the impregnation with the liquid synthetic resin and before the thermal hardening of the latter, to the action of a catalyst exerting a hardening effect on the synthetic resin used.

These prior art methods, however, suffer from the drawback in that they require impregnation of the graphite articles utilizing vacuum and pressure in autoclaves or similar equipment. Thus, precision machined graphite shapes and large parts which are not easily processed in autoclave type equipment may not be treated by these methods to eliminate surface porosity. Furthermore, it is not possible with these prior methods to achieve thin, uniform, level coatings or the resinous material on the surfaces of the porous carbon or graphite articles.

According to the present invention there is provided a method for sealing a porous carbon or graphite article to a predetermined depth below its exposed surface without disturbing the surface finish of the article which comprises the steps of:
(a) applying a thermosetting treating solution upon the surface of a porous carbon or graphite article, wherein the temperature of the surface of the article is below the cure temperature of the treating solution, and the viscosity of the treating solution upon the surface of the article is sufficiently low to permit infiltration of the treating solution into the pores of the article at ambient pressure;
(b) allowing the treating solution to infiltrate into the pores of the article, wherein the treating solution is applied for a sufficient number of times for the rate of infiltration of the treating solution into the pores of the article to decrease to a predetermined minimum;
(c) removing any excess treating solution from the surface of the article; and
(d) heating the surface of the article to slowly raise the temperature of the impregnated resin to the curing temperature of the resin to polymerize the resin in situ within the pores of the article to form a substantially non-porous surface on the article; steps (a) to (d) inclusive being carried out at ambient pressure.

Possible ways of applying the treating solution in step (a) are by spraying the solution on the surface, or by wiping the treating solution on the surface, or by immersing the article within the treating solution. The article to be sealed may be, for example, a fine grain graphite having a maximum grain size of about 0.152mm (0.006 inches).

Steps (a) and (b) may be executed a plurality of times, preferably 10 to 14 times.

The impregnated surface of the article is heated at a rate which is preferably about 5°C to about 25°C per hour, more preferably at a rate of about 25°C to about 200°C

It has been unexpectedly found in accordance with the invention that the surfaces of a porous carbon or graphite article can be effectively sealed by application of a treating solution containing a high temperature polymerizable liquid resin of low viscosity, e.g., a furan resin, and a heat activated catalyst, e.g., zinc chloride, at ambient or atmospheric pressure if the article is preheated before applying the treating solution. The article is desirably preheated to an elevated temperature which is sufficiently high to reduce the viscosity of the treating solution upon contact with the heated surface sufficiently to permit infiltration of the treating solution into the pores of the article, but which at the same time is below the temperature at which the resin begins to rapidly polymerize in the presence of the catalyst. The treating solution is preferably at ambient temperature when applied to the heated surface. The surface of the article is preferably heated to a temperature of about 60°C before application of the treating solution. The viscosity of the treating solution is preferably about 5 mPa s (5 centipoise) at 25°C.

The treating solution may be prepared by dissolving a resin polymerizable by heat in a solvent, preferably by admixing at ambient temperature a major proportion of a high temperature polymerizable liquid resin and a minor proportion of a heat activated catalyst. Although a number of high temperature polymerizable liquid resins of low viscosity can be used in the method of the invention, a furan or phenolic resin has been found to be the most practical. The preferred liquid resin, however, is furfural or furfuryl alcohol which are derivatives of furan. Furfuryl alcohol is most preferred for use in the method of the invention because of its low liquid viscosity at ambient temperatures and also because of its known compatibility with carbon and graphite.

Furfuryl alcohol is a reactive compound which can be reseinified by a number of heat activated catalysts. The most suitable catalysts, however, are acidic catalysts. Mineral acids, strong organic acids, Lewis acids an acyl halides are very active catalysts for this purpose. Co-reactive catalysts such as phthalic anhydride may also be utilized.

Illustrative of the many catalysts that can be used are the following: toluene sulfonic acid, phenol sulfonic acid, acid chlorides, benzene sulfonic acid, sulfonic acid salts, phthaloyl chloride, hydrochloric acid, phosphoric acid, maleic acid, sulfuric acid and zinc chloride. It has been found however, that furfuryl alcohol catalyzed with zinc chloride exhibits superior sealing capability at relatively low curing temperatures and, for this reason, zinc chloride is the preferred catalyst for use in the practice of the invention.

In general, the catalyst should be employed in amounts which will ensure as low a viscosity as possible under working conditions to facilitate optimum penetration into the surface of the graphite. Typically, a room temperature viscosity of about 5 mPa s (about 5 centipoise) has been found to be suitable. In the case of the preferred resin-catalyst system, it is recommended to employ an aqueous zinc chloride solution catalyst in relative weight proportions of from about 2% to 10% catalyst solution to furfuryl alcohol. A particular useful heat activated catalyst is a 50% aqueous solution of zinc chloride. Phthalic anhydride may also be employed as a co-reactive catalyst.

Before application of the treating solution, the surfaces of the porous carbon or graphite article are thoroughly cleaned using known procedures in order to remove any surface contaminants as well as any loose graphite particles and dust that may remain after the machining operation. The cleaned carbon or graphite article is then placed in an oven, e.g., a forced draft oven, and heated at ambient pressure to an elevated temperature which is high enough to reduce the viscosity of the treating solution upon contact with the heated surfaces of the article. The preheat temperature to be used with any given resin-catalyst system must be chosen carefully to achieve maximum "thinning" of the treating solution while avoiding rapid cross-linking of the resin. For the zinc chloride catalyzed furfuryl alcohol system, the optimum preheat temperature is about 60°C.

The treating solution is applied uniformly to the preheated surfaces of the porous carbon or graphite article at ambient pressure using any one of several known techniques. The solution may be applied by spraying or wiping with a brush or cloth, for example, or by immersing the article within a bath of the treating solution. In any case, the low viscosity treating solution will be drawn by capillary action into the open pores of the carbon or graphite article. This effect is even further enhanced by preheating the article as described hereinabove, which reduces the treat solution viscosity as the solution comes into contact with the article surfaces.

The treating solution is continuously reapplied to the preheated surfaces of the carbon or graphite article as absorption occurs, until the surfaces appear to be completely saturated. Generally, the surfaces of the article will be recoated 10 to 14 times until absorption becomes quite slow, say five minutes to show dry spots, for example, or until the article has cooled to ambient temperatures.

The carbon or graphite article with its saturated but dry surfaces is then placed in an atmospheric pressure oven and heated slowly to an elevated temperature, e.g., about 200°C, which is sufficient to cure the impregnated resin in situ. Preferably, the article is heated to curing temperatures using different heating rates in a stepwise fashion with various hold periods at intermediate temperatures. Successful curing has been achieved with heating rates ranging from about 5°C/hr. to about 25°C/hr. More rapid curing results in resin exuding from the article surfaces.

Table I below sets forth a preferred schedule for heating the impregnated carbon or graphite article according to the invention.

**Table I**

| Start Temperature | Rate | End Temperature | Hold |
|---|---|---|---|
| 60°C | -- | -- | One Hour |
| 60°C | 22°C/Hour | 140°C | -- |
| 140°C | 34°C/Hour | 200°C | -- |
| 200°C | -- | -- | One Hour |

A "finish" coating may be applied to the impregnated carbon or graphite article after curing, which serves to fill any residual porosity and to level the article surfaces. In this application, the resin impregnated surfaces of the article are heated to an elevated temperature which is below the polymerizing temperature of the resin in the presence of the catalyst, i.e., about 45°C in the case of the preferred furfuryl alcohol-zinc chloride system. The heated resin impregnated surfaces of the article are then coated uniformly with a layer of the treating solution. By hand burnishing the treated surfaces with a damp cloth as polymerization advances, it is possible to produce a thin, level, glassy surface film on the article surfaces. The solution is reapplied and burnished several or more times until the porosity at the surfaces is essentially eliminated. The coated layer is then heated to slowly raise its temperature to complete the polymerization of the resin, thereby curing the resin to produce a thin, level, uniform, liquid and gas impervious film or coating on the surface of the article. The film or coating is chemically cross-linked with the resin impregnant filling the pores of the article.

It should be emphasized that the present method of impregnation and curing is carried out at ambient or atmospheric pressure and yet effectively seals the porous carbon or graphite article by filling its porosity at the surface to a depth estimated to be approximately 30-50 millimetres. In contrast, prior methods of pressure impregnation and curing such as in the case of US-A- 2 909 450 supra, utilizing autoclave equipment and the like ordinarily result in filling of substantially all of the pores throughout the body of the article. The present method constitutes a significant improvement in that precision machined shapes and large parts which are not easily processed in autoclave equipment may be treated to fill or block all surface porosity, providing apparent total imperviousness. Furthermore, precision machined carbon or graphite surfaces may be treated to achieve thin, uniform, level coatings not normally possible with autoclave processing.

According to a particular embodiment of the present invention there is provided a method which comprises the further steps of:
(e) applying the treating solution to the surface of the article to form a layer of the treating solution upon the surface of the article;
(f) burnishing the layer of treating solution to achieve level uniform filling of any pores present at the surface;
   wherein steps (e) and (f) are executed for a sufficient number of times such that the porosity at the surface is substantially eliminated; and
(g) heating the coated layer to slowly raise the temperature thereof to the polymerization temperature of the resin, thereby curing the resin to produce a level, impervious surface film which is chemically cross-linked with the resin impregnate filling the pores of the article. In such a method, the impregnated surface of the article is preferably burnished in step (f) with a cloth dampened with the treating solution. The non-porous surface produced in step (d) in this particular embodiment is preferably heated to a temperature below the cure temperature of the treating solution before applying a layer of the polymerizable treating solution in Step (e). Also the treating solution in step (e) preferably comprises furfuryl alcohol and zinc chloride in an amount of from about 2 to about 10 percent by weight of the furfuryl alcohol and wherein the non-porous surface of the article is heated to about 45°C.

The following example will serve to further illustrate the practice of the invention.

### EXAMPLE

A treating solution was prepared by admixing approximately 95 weight percent furfuryl alcohol, 2.5 weight percent anhydrous zinc chloride powder and 2.5 weight percent deionized water. The mixing sequence was as follows: The zinc chloride powder was first dissolved in the water and the aqueous zinc chloride solution so prepared was then added to the furfuryl alcohol. This treating solution was used to surface impregnate a number of graphite articles which were machined to the desired shape and then thoroughly cleaned to remove all surface contaminants and loose graphite particles and dust. The graphite articles were then heated in an atmospheric pressure forced draft oven to a temperature of 60°C. After the articles had stabilized at this temperature, they were removed from the oven and placed in a well ventilated and lighted work area. A layer of the treating solution was then applied to the preheated graphite articles at room temperature by brushing the solution uniformly onto the surfaces thereof. The solution was allowed to soak into the article surfaces and another layer of the solution was applied and allowed to absorb in the same manner. This procedure was repeated an average of 10 to 14 times until absorption became quite slow, i.e., five minutes to show dry spots, for example. After the final application of the treating solution, the articles were allowed to set for about 20 minutes to one-half hour. Any remaining liquid was then wiped off the surfaces. In those cases where liquid resin built up on the surfaces, it was softened and removed using a treating solution dampened cloth. The graphite articles were then heated in an atmospheric oven to cure the impregnated resin using the same heating schedule or cycle set forth in Table I. The cured articles were then removed from the oven and allowed to cool to room temperature. Thereafter, the articles were reheated again to a temperature of about 45°C. Any dust or residue on the surfaces of the articles from the previous cure cycle were wiped off and removed. A generous coating of the treating solution was then applied to the entire surface of each graphite article. Only minimal absorption was evident. The coated surfaces of the articles were then burnished with a solution dampened cloth to achieve level uniform filling of the surface porosity. In those cases where the porosity reappeared, an additional layer or layers of the treating solution were then reapplied with repeat of the burnishing. The coating became tacky as the final layers of the solution were applied along with burnishing. Excessive fuming and build up of the coating was avoided in all cases. After the finish coat was complete the articles were again heated using the same curing schedule in order to cure the resin in the final coat.

Although the experimental work described in the foregoing example was carried out using fine-grained graphite articles having typically a maximum grain size of 0.152 mm (about 0.006"), the method of the invention is not so limited but is broadly applicable as well to the impregnation and sealing of coarser grade carbon and graphite materials. Moreover, it will be understood that other catalyst solutions may be employed instead of the 50% aqeuous zinc chloride solution used in the example.

## Claims

1. A method for sealing a porous carbon or graphite article to a predetermined depth below its exposed surface without disturbing the surface finish of the article which comprises the steps of:
(a) applying a thermosetting treating solution upon the surface of a porous carbon or graphite article, wherein the temperature of the surface of the article is below the cure temperature of the treating solution, and the viscosity of the treating solution upon the surface of the article is sufficiently low to permit infiltration of the treating solution into the pores of the article at ambient pressure;
(b) allowing the treating solution to infiltrate into the pores of the article, wherein the treating solution is applied for a sufficient number of times for the rate of infiltration of the treating solution into the pores of the article to decrease to a predetermined minimum;
(c) removing any excess treating solution from the surface of the article; and
(d) heating the surface of the article to slowly raise the temperature of the impregnated resin to the curing temperature of the resin to polymerize the resin in situ within the pores of the article to form a substantially non-porous surface on the article; steps (a) to (d) inclusive being carried out at ambient pressure.

2. A method according to claim 1, wherein steps (a) and (b) are executed a plurality of times.

3. A method according to claim 2, wherein steps (a) and (b) are executed from 10 to 14 times.

4. A method according to any of claims 1 to 3, wherein the article is a fine grain graphite having a maximum grain size of about 0.152 mm (0.006 inches).

5. A method according to any of claims 1 to 4, wherein the treating solution is applied in step (a) by spraying the treating solution on the surface, or by wiping the treating solution on the surface, or by immersing the article within the treating solution.

6. A method according to any of claims 1 to 5, wherein the impregnated surface of the article is heated at a rate of from about 5°C to about 25°C per hour.

7. A method according to any of claims 1 to 6, wherein the treating solution is prepared by dissolving a resin polymerizable by heat in a solvent.

8. A method according to any of claims 1 to 7, wherein the surface of the article is heated before coating with the treating solution.

9. A method according to any of claims 1 to 8, wherein before the application of the treating solution in (a) the surface of the article is heated to a temperature sufficiently high to reduce the viscosity of the treating solution upon contact with the heated surface sufficiently to permit the infiltration of the treating solution into the pores of the article.

10. A method according to claim 8 or 9, wherein the treating solution is at ambient temperature when applied to the heated surface.

11. A method according to any of claims 8 to 10, wherein the viscosity of the treating solution is about 5 mPa s (5 centipoise) at 25°C.

12. A method according to any of claims 8 to 11, wherein the surface of the article is heated to a temperature of about 60°C before application of the treating solution.

13. A method according to any of claims 8 to 12, wherein the treating solution is prepared by admixing at ambient temperature a major proportion of a high temperature polymerizable liquid resin and a minor proportion of a heat activated catalyst.

14. A method according to any of claims 1 to 12, wherein the high temperature polymerizable liquid resin is selected from furan resins and phenolic resins.

15. A method according to claim 14, wherein the liquid resin is furfural and/or furfuryl alcohol.

16. A method according to any of claims 13 to 15, wherein the heat activated catalyst is selected from mineral acids, strong organic acids, Lewis acids, and acyl halides.

17. A method according to any of claims 13 to 16, wherein the heat activated catalyst is selected from toluene sulfonic acid, phenol sulfonic acid, acid chlorides, benzene sulfonic acid, sulfonic acid salts, phthaloyl chloride, hydrochloric acid, phosphoric acid, maleic acid, sulfuric acid and zinc chloride.

18. A method according to claim 17, wherein the heat activated catalyst is a 50% aqueous solution of zinc chloride.

19. A method according to claim 18, wherein phthalic anhydride is employed as a co-reactive catalyst.

20. A method according to claim 19, wherein the treating solution comprises furfuryl alcohol and zinc chloride in an amount of from about 2 to about 10 percent by weight of the furfuryl alcohol.

21. A method according to claim 20, wherein the treating solution comprises about 95 wt % furfuryl alcohol, about 2.5 wt.% anhydrous zinc chloride and about 2.5 wt % deionized water.

22. A method according to any of claims 1 to 21, wherein the impregnated surface of the article is heated in step (d) at a rate of about 25°C per hour to a final temperature of about 200°C.

23. A method according to any of claims 1 to 21, wherein the impregnated surface of the article is heated in step (d) according to the schedule set forth in Table I, namely
**Table I**
| Start Temperature | Rate | End Temperature | Hold |
|---|---|---|---|
| 60°C | -- | -- | One Hour |
| 60°C | 22°C/Hour | 140°C | -- |
| 140°C | 34°C/Hour | 200°C | -- |
| 200°C | -- | -- | One Hour |

24. A method according to any of claims 1 to 23, further comprising the steps of:
(e) applying the treating solution to the surface of the article to form a layer of the treating solution upon the surface of the article;
(f) burnishing the layer of treating solution to achieve level uniform filling of any pores present at the surface;
wherein steps (e) and (f) are executed for a sufficient number of times such that the porosity at the surface is substantially eliminated; and
(g) heating the coated layer to slowly raise the temperature thereof to the polymerization temperature of the resin, thereby curing the resin to produce a level, impervious surface film which is chemically cross-linked with the resin impregnant filling the pores of the article.

25. A method according to claim 24, wherein the impregnated surface of the article is burnished in step (f) with a cloth dampened with the treating solution.

26. A method according to claim 24 or 25, wherein the non-porous surface produced in step (d) is heated to a temperature below the cure temperature of the treating solution before applying a layer of polymerizable treating solution in step (e).

27. A method according to any of claims 24 to 25, wherein the treating solution in step (e) comprises furfuryl alcohol and zinc chloride in an amount of from about 2 to about 10 percent by weight of the furfuryl alcohol and wherein the non-porous surface of the article is heated to about 45°C.

## Patentansprüche

1. Ein Verfahren zur Versiegelung von porösen Kohlenstoff- oder Graphitartikeln bis zu einer vorgegebenen Tiefe unterhalb ihrer äußeren Oberfläche, ohne die Oberflächengüte des Artikels zu verändern. Das Verfahren beinhaltet die folgenden Schritte:
(a) das Auftragen einer wärmehärtbaren Behandlungslösung auf die Oberfläche eines porösen Kohlenstoff- oder Graphitartikels, wobei die Temperatur der Oberfläche des Artikels unterhalb der Verharzungstemperatur der Behandlungslösung liegt und wobei die Viskosität der Behandlungslösung auf der Oberfläche des Artikels ausreichend gering ist, um ein Eindringen der Behandlungslösung in die Poren des Artikels bei Umgebungsdruck zu erlauben;
(b) das Eindringen der Behandlungslösung in die Poren des Artikels, wobei die Behandlungslösung ausreichend oft aufgetragen wird, um den Grad an Eindringung der Behandlungslösung in die Poren des Artikels bis auf ein festgelegtes Minimum zu reduzieren;
(c) das Entfernen von jeglicher überschüssiger Behandlungslösung von der Oberfläche des Artikels; und
(d) das Aufheizen der Oberfläche des Artikels um die Temperatur des eingedrungenen Harzes langsam auf die Vernetzungstemperatur des Harzes zu steigern, um das Harz in situ innerhalb der Poren des Artikels zu polymerisieren. Dabei wird eine im wesentlichen nicht-poröse Oberfläche auf dem Artikel erzeugt. Die Schritte (a) bis einschließlich (d) werden bei Umgebungsdruck durchgeführt.

2. Ein Verfahren nach Anspruch 1, wobei die Schritte (a) und (b) mehrmals durchgeführt werden.

3. Ein Verfahren nach Anspruch 2, wobei die Schritte (a) und (b) 10 bis 14 mal durchgeführt werden.

4. Ein Verfahren nach einem der Ansprüche 1 bis 3, wobei der Artikel aus feinkörnigem Graphit mit einer maximalen Korngröße von ungefähr 0,152 mm (0,006 inches) besteht.

5. Ein Verfahren nach einem der Ansprüche 1 bis 4, wobei die Behandlungslösung in Schritt (a) durch das Aufsprühen der Behandlungslösung auf die Oberfläche, durch Aufstreichen der Behandlungslösung auf die Oberfläche oder durch Eintauchen des Artikels in die Behandlungslösung aufgetragen wird.

6. Ein Verfahren nach einem der Ansprüche 1 bis 5, wobei die imprägnierte Oberfläche des Artikels mit von ungefähr 5°C pro Stunde bis ungefähr 25°C pro Stunde aufgeheizt wird.

7. Ein Verfahren nach einem der Ansprüche 1 bis 6, wobei die Behandlungslösung durch Lösen eines Harzes in einem Lösungsmittel hergestellt wird. Das Harz ist durch Wärme polymerisierbar.

8. Ein Verfahren nach einem der Ansprüche 1 bis 7, wobei die Oberfläche des Artikels vor dem Auftragen der Behandlungslösung aufgeheizt wird.

9. Ein Verfahren nach einem der Ansprüche 1 bis 8, wobei die Oberfläche des Artikels in Schritt (a) vor der Auftragung der Behandlungslösung auf eine Temperatur aufgeheizt wird, die ausreichend ist, um die Viskosität der Behandlungslösung bei Kontakt mit der aufgeheizten Oberfläche ausreichend zu reduzieren, um das Eindringen der Behandlungslösung in die Poren des Artikels zu ermöglichen.

10. Ein Verfahren nach Anspruch 8 oder 9, wobei die Behandlungslösung Umgebungstemperatur hat, wenn sie auf die aufgeheizte Oberfläche des Artikels aufgetragen wird.

11. Ein Verfahren nach einem der Ansprüche 8 bis 10, wobei die Viskosität der Behandlungslösung ungefähr 5 mPa s (5 centipoise) bei 25°C beträgt.

12. Ein Verfahren nach einem der Ansprüche 8 bis 11, wobei die Oberfläche des Artikels vor der Auftragung der Behandlungslösung auf eine Temperatur von ungefähr 60°C aufgeheizt wird.

13. Ein Verfahren nach einem der Ansprüche 8 bis 12, wobei die Behandlungslösung hergestellt wird, indem bei Umgebungstemperatur als Hauptbestandteil ein bei hohen Temperaturen polymerisierbares flüssiges Harz und ein geringer Anteil eines wärmeaktivierbaren Katalysators zusammengemischt werden.

14. Ein Verfahren nach einem der Schritte 1 bis 12, wobei das bei hohen Temperaturen polymerisierbare flüssige Harz entweder ein Furanharz oder ein Phenolharz ist.

15. Ein Verfahren nach Anspruch 14, wobei das flüssige Harz Furfural und/oder Furfurylalkohol ist.

16. Ein Verfahren nach einem der Ansprüche 13 bis 15, wobei der wärmeaktivierbare Katalysator aus der Gruppe der Mineralsäuren, starken organischen Säuren, Lewissäuren oder Acylhalogeniden gewählt wird.

17. Ein Verfahren nach einem der Ansprüche 13 bis 16, wobei der wärmeaktivierbare Katalysator aus der Gruppe Toluolsulfonsäure, Phenolsulfonsäure, Säurechloriden, Benzolsulfonsäure, Sulfonsäuresalzen, Phthaloylchlorid, Salzsäure, Phosphorsäure, Maleinsäure, Schwefelsäure oder Zinkchlorid gewählt wird.

18. Ein Verfahren nach Anspruch 17, wobei der wärmeaktivierbare Katalysator eine 50% ige wäßrige Lösung von Zinkchlorid ist.

19. Ein Verfahren nach Anspruch 18, wobei Phthalsäureanhydrid als Sekundärkatalysator eingesetzt wird.

20. Ein Verfahren nach Anspruch 19, wobei die Behandlungslösung aus Furfurylalkohol und Zinkchlorid in einem Anteil von ungefähr 2 bis ungefähr 10 Gewichtsprozent bezogen auf den Furfurylalkohol besteht.

21. Ein Verfahren nach Anspruch 20, wobei die Behandlungslösung aus ungefähr 95 Gew.-% Furfurylalkohol, ungefähr 2,5 Gew.-% wasserfreiem Zinkchlorid und ungefähr 2,5 Gew.-% deionisiertem Wasser besteht.

22. Ein Verfahren nach einem der Ansprüche 1 bis 21, wobei die imprägnierte Oberfläche des Artikels in Schritt (d) mit ungefähr 25°C pro Stunde auf die endgültige Temperatur von ungefähr 200°C aufgeheizt wird.

23. Ein Verfahren nach einem der Ansprüche 1 bis 21, wobei die imprägnierte Oberfläche des Artikels in Schritt (d) entsprechend der Aufstellung der nachfolgenden Tabelle I aufgeheizt wird:
**Tabelle I**
| Anfangstemperatur | Aufheizrate | Endtemperatur | Verweildauer |
|---|---|---|---|
| 60°C | -- | -- | eine Stunde |
| 60°C | 22°C/h | 140°C | -- |
| 140°C | 34°C/h | 200°C | -- |
| 200°C | -- | -- | eine Stunde |

24. Ein Verfahren nach einem der Ansprüche 1 bis 23, wobei weiterhin die folgenden Schritte enthalten sind:
(e) das Auftragen der Behandlungslösung auf die Oberfläche des Artikels, um eine Schicht der Behandlungslösung auf der Oberfläche des Artikel zu erzeugen;
(f) das Polieren der Schicht aus Behandlungslösung, um zu erreichen, daß alle Poren an der Oberfläche gleichmäßig gefüllt sind.
Hierbei werden die Schritte (e) und (f) ausreichend oft durchgeführt, um die Porösität an der Oberfläche im Wesentlichen zu entfernen; und
(g) das Aufheizen der aufgetragenen Schicht, um deren Temperatur langsam auf die Polymerisationstemperatur des Harzes zu erhöhen. Hierbei vernetzt das Harz und bildet einen egalisierten, undurchlässigen Oberflächenfilm der chemisch mit dem die Poren des Artikels füllenden Imprägnierharzes quervernetzt ist.

25. Ein Verfahren nach Anspruch 24, wobei die imprägnierte Oberfläche des Artikels in Schritt (f) mit einem mit der Behandlungslösung getränktem Tuch poliert wird.

26. Ein Verfahren nach Anspruch 24 oder 25, wobei die in Schritt (d) erzeugte nicht-poröse Oberfläche auf eine Temperatur unterhalb der Verharzungstemperatur der Behandlungslösung aufgeheizt wird, bevor eine Schicht aus polymerisierbarer Behandlungslösung in Schritt (e) aufgetragen wird.

27. Ein Verfahren nach einem der Ansprüche 24 bis 25, wobei die Behandlungslösung in Schritt (e) aus Furfurylalkohol und Zinkchlorid in Anteilen von ungefähr 2 bis ungefähr 10 Gewichtsprozent bezogen auf das Gewicht des Furfurylalkohols besteht und wobei die nicht-poröse Oberfläche des Artikels auf ungefähr 45°C aufgeheizt wird.

## Revendications

1. Procédé d'obturation d'un article poreux en carbone ou en graphite à une profondeur prédéterminée au-dessous de sa surface exposée sans altérer le fini de surface de l'article, qui comprend les étapes consistant :
(a) à appliquer une solution traitante thermo-durcissable à la surface d'un article poreux en carbone ou en graphite, la température de la surface de l'article étant inférieure à la température de maturation de la solution traitante et la viscosité de cette dernière à la surface de l'article étant suffisamment basse pour permettre son infiltration dans les pores de l'article à la pression ambiante ;
(b) à amener la solution traitante à s'infiltrer dans les pores de l'article, la solution traitante étant appliquée un nombre suffisant de fois pour que le degré d'infiltration de la solution traitante dans les pores de l'article s'abaisse jusqu'à un minimun prédéterminé ;
(c) à enlever tout excès de solution traitante de la surface de l'article ; et
(d) à chauffer la surface de l'article pour élever lentement la température de la résine infiltrée jusqu'à la température de maturation de cette dernière pour la polymériser in situ dans les pores de l'article de manière à former une surface principalement non poreuse sur l'article ; les étapes (a) à (d) inclus étant conduites à la pression ambiante.

2. Procédé suivant la revendication 1, dans lequel les étapes (a) et (b) sont exécutées plusieurs fois.

3. Procédé suivant la revendication 2, dans lequel les étapes (a) et (b) sont exécutées 10 à 14 fois.

4. Procédé suivant l'une quelconque des revendications 1 à 3, dans lequel l'article est un graphite à grain fin ayant un diamètre maximal de grain d'environ 0,152 mm (0,006 in).

5. Procédé suivant l'une quelconque des revendications 1 à 4, dans lequel la solution traitante est appliquée dans l'étape (a) par pulvérisation de cette solution à la surface, ou en frottant la surface avec la solution traitante, ou en immergeant l'article dans cette solution.

6. Procédé suivant l'une quelconque des revendications 1 à 5, dans lequel la surface imprégnée de l'article est chauffée à une vitesse d'environ 5°C à environ 25°C par heure.

7. Procédé suivant l'une quelconque des revendications 1 à 6, dans lequel la solution traitante est préparée par dissolution dans un solvant d'une résine polymérisable à chaud.

8. Procédé suivant l'une quelconque des revendications 1 à 7, dans lequel la surface de l'article est chauffée avant d'être revêtue de la solution traitante.

9. Procédé suivant l'une quelconque des revendications 1 à 8, dans lequel, avant l'application de la solution traitante en (a), la surface de l'article est chauffée à une température assez haute pour réduire suffisamment la viscosité de la solution traitante, au contact de la surface chauffée, pour permettre l'infiltration de la solution traitante dans les pores de l'article.

10. Procédé suivant la revendication 8 ou 9, dans lequel la solution traitante se trouve à la température ambiante lorsqu'elle est appliquée à la surface chauffée.

11. Procédé suivant l'une quelconque des revendications 8 à 10, dans lequel la viscosité de la solution traitante est d'environ 5 mPa.s (5 centipoises) à 25°C.

12. Procédé suivant l'une quelconque des revendications 8 à 11, dans lequel la surface de l'article est chauffée à une température d'environ 60°C avant l'application de la solution traitante.

13. Procédé suivant l'une quelconque des revendications 8 à 12, dans lequel la solution traitante est préparée par mélange, à la température ambiante, d'une proportion dominante d'une résine liquide polymérisable à haute température et d'une proportion secondaire d'un catalyseur activé à la chaleur.

14. Procédé suivant l'une quelconque des revendications 1 à 12, dans lequel la résine liquide polymérisable à haute température est choisie entre les résines de furanne et des résines phénoliques.

15. Procédé suivant la revendication 14, dans lequel la résine liquide est le furfural et/ou l'alcool furfurylique.

16. Procédé suivant l'une quelconque des revendications 13 à 15, dans lequel le catalyseur activé par la chaleur est choisi entre des acides minéraux, des acides organiques forts, des acides de Lewis et des halogénures d'acyle.

17. Procédé suivant l'une quelconque des revendications 13 à 16, dans lequel le catalyseur activé par la chaleur est choisi entre l'acide toluènesulfonique, l'acide phénolsulfonique, des chlorures d'acides, l'acide benzènesulfonique, des sels d'acides sulfoniques, le chlorure de phtaloyle, l'acide chlorhydrique, l'acide phosphorique, l'acide maléique, l'acide sulfurique et le chlorure de zinc.

18. Procédé suivant la revendication 17, dans lequel le catalyseur activé par la chaleur est une solution aqueuse à 50 % de chlorure de zinc.

19. Procédé suivant la revendication 18, dans lequel l'anhydride phtalique est utilisé comme catalyseur co-réactif.

20. Procédé suivant la revendication 19, dans lequel la solution traitante comprend de l'alcool furfurylique et du chlorure de zinc en une quantité allant d'environ 2 à environ 10 % en poids de l'alccol furfurylique.

21. Procédé suivant la revendication 20, dans lequel la solution traitante comprend environ 95 % en poids d'alcool furfurylique, environ 2,5 % en poids de chlorure de zinc anhydre et environ 2,5 % en poids d'eau désionisée.

22. Procédé suivant l'une quelconque des revendications 1 à 21, dans lequel la surface imprégnée de l'article est chauffée dans l'étape (d) à une vitesse d'environ 25°C par heure jusqu'à une température finale d'environ 200°C.

23. Procédé suivant l'une quelconque des revendications 1 à 21, dans lequel la surface imprégnée de l'article est chauffée dans l'étape (d) conformément au programme établi sur le Tableau I, à savoir
**Tableau I**
| Température de départ | Vitesse | Température finale | Maintien |
|---|---|---|---|
| 60°c | -- | -- | 1 heure |
| 60°C | 22°C/heure | 140°C | -- |
| 140°C | 34°C/heure | 200°C | -- |
| 200°C | -- | -- | 1 heure |

24. Procédé suivant l'une quelconque des revendications 1 à 23, qui comprend en outre les étapes consistant :
(e) à appliquer la solution traitante à la surface de l'article pour former une couche de la solution traitante sur la surface de l'article ;
(f) à polir la couche de solution traitante pour atteindre un remplissage de niveau uniforme de tous les pores présents à la surface ;
les étapes (e) et (f) étant exécutées un nombre de fois suffisant pour que la porosité au niveau de la surface soit principalement éliminée ; et
(g) à chauffer la couche revêtue pour élever lentement sa température jusqu'à la température de polymérisation de la résine afin que la maturation de cette dernière permette d'obtenir un film superficiel imperméable uni qui soit chimiquement réticulé avec la charge de résine imprégnant les pores de l'article.

25. Procédé suivant la revendication 24, dans lequel la surface imprégnée de l'article est polie dans l'étape (f) avec une étoffe imbibée de la solution traitante.

26. Procédé suivant la revendication 24 ou 25, dans lequel la surface non poreuse produite dans l'étape (d) est chauffée à une température inférieure à la température de maturation de la solution traitante avant l'application d'une couche de solution traitante polymérisable dans l'étape (e).

27. Procédé suivant l'une ou l'autre des revendications 24 et 25, dans lequel la solution traitante dans l'étape (e) comprend de l'alcool furfurylique et du chlorure de zinc en une quantité d'environ 2 à environ 10 % en poids de l'alcool furfurylique, et la surface non poreuse de l'article est chauffée à environ 45°C.
